Europäisches Patentamt

European Patent Office

Office européen des brevets

(11) Publication number: **0 266 781**
**A1**

(12) # EUROPEAN PATENT APPLICATION

(21) Application number: 87116349.9

(22) Date of filing: 05.11.87

(51) Int. Cl.4: **G11B 23/03** , G11B 23/033

(30) Priority: 06.11.86 JP 170867/86 U
06.11.86 JP 264368/86
13.03.87 JP 36871/87 U

(43) Date of publication of application:
**11.05.88 Bulletin 88/19**

(84) Designated Contracting States:
**DE FR GB IT**

(71) Applicant: **SONY CORPORATION**
**7-35 Kitashinagawa 6-Chome Shinagawa-ku**
**Tokyo 141(JP)**

(72) Inventor: **Nemoto, Tsuneo**
**c/o Sony Corporation 7-35 Kitashinagawa**
**6-chome**
**Shinagawa-ku Tokyo(JP)**
Inventor: **Harada, Masayuki**
**c/o Sony Corporation 7-35 Kitashinagawa**
**6-chome**
**Shinagawa-ku Tokyo(JP)**
Inventor: **Funawatari, Kouji**
**c/o Sony Corporation 7-35 Kitashinagawa**
**6-chome**
**Shinagawa-ku Tokyo(JP)**

(74) Representative: **Patentanwälte TER MEER -**
**MÜLLER - STEINMEISTER**
**Mauerkircherstrasse 45**
**D-8000 München 80(DE)**

(54) **Sliding shutter mechanism for disk cassette.**

(57) A disk cassette (1) has a cassette casing (3), in which a disk (2) is rotatably disposed. The cassette casing is formed with a disk access aperture (3a). A sliding shutter (4) is slidably mounted on the cassette casing. The shutter has section (4b,4d) opposing the disk access aperture. A pair of first and second through openings (4a) are formed on the section opposing the disk access aperture. The shutter is biased by means of a pair of bias spring members (5) in mutually opposite first and second directions. The first and second through openings (4a) are so arranged as to align the first through opening to the disk access aperture (3a) when the shutter is shifted in a first direction against the spring force of the second spring and to align the second through opening (4a) to the disk access aperture (3a) when the shutter is shifted in the second direction against the spring force of the first spring.

**FIG.1**

Ia.

## SLIDING SHUTTER MECHANISM FOR DISK CASSETTE

The present invention relates generally to a disk cassette containing a disk-form information recording medium which is accessible through a disk access aperture defined in a cassette casing and, which disk cassette has a sliding shutter for openably closing the disk access aperture. More specifically, the invention relates to a disk cassette which has a shutter slidably mounted on a cassette casing housing therein a disk-form information recording medium having an information recording surface, which shutter is formed with a pair of through openings for openably closing a disk access aperture formed through the cassette casing and slidable for aligning either one of the through opening to the disk access aperture for allowing access to the information recording surface of the disk.

Disk cassettes, such as magnetic disk cassettes, having sliding shutter mechanisms for openably closing disk access openings have been utilized for recording information on recording tracks formed on a recording surface of the disks which serve as recording media. For example, such disk cassette has been disclosed in the US-A-4 445 155.

The shown construction of the disk cassette has been widely known and available in the market as 3.5-inches disk cassette, for example. As is well known, such disk cassette includes the recording disk with at least one recording surface on which one or more recording tracks are formed. The disk is housed within a cassette casing in rotatable fashion so as to be rotatingly driven by means of a known disk drive apparatus. The cassette casing defines at least one disk access aperture opposing the recording surface so that the recording surface may be accessed by a recording and/or reproducing head therethrough. A sliding shutter is slidably mounted on the cassette casing for openably closing the disk access aperture so that it may close the disk access opening while the disk cassette is not in use and open the disk access opening when it is loaded on the disk drive apparatus for allowing access of the recording and/or reproducing head to the recording surface. In order to openably closing the disk access aperture of the cassette casing, the sliding shutter is formed with a through opening which is placed at a position offset from the disk access aperture in a closing position and is aligned with the disk access aperture in an opening position.

In the recent years, it has been required to expand the recording capacities of such disk cassettes. In order to answer to such needs, a so-called double-side disk which has recording surfaces on both sides has become available. Such double-side disks are appreciated to have twice greater recording capacity and have therefore become popular. In the usual case, in order to perform recording and/or reproduction on such double-side disk-type disk cassette, a double-side supporting disk drive apparatus is used. The double-side disk supporting disk drive apparatus has two head assemblies. One of the head assembly is arranged above the disk as loaded to access one side, i.e. the top-side of the disk and the other head assembly is arranged below the disk for accessing the other side, i.e. the bottom-side, of the disk.

In such known arrangement, the disk access apertures are formed on both sides of the cassette casing and the sliding shutter is formed with through openings in the surfaces respectively opposing to the top-side and bottom-side disk access apertures. In case of the double-side supporting disk drive apparatus, top-side and bottom-side recording surfaces can be accessed by selected one of head assembly while the sliding shutter is shifted in a predetermined direction to align the through opening with the disk access opening. Therefore, in such case, the disk cassette need not be loaded on the disk drive apparatus in reversed fashion or upside down. However, such disk drive apparatus is clearly more expensive than that of a single-side supporting disk drive apparatus which has only one disk opposing either the top-side or bottom-side recording surface of the disk, because of presence of two head assemblies. Therefore, in view of the costs for production of the disk drive apparatus, the single-side supporting disk drive apparatus is preferable. Therefore, it may be benefitial for the users when recording and/reproduction of information on both top-side and bottom-side of the double-side disk utilizing the single-side supporting disk drive apparatus.

Here, a difficulty is encountered in that, since the disk drive apparatus is provided with a sliding shutter handling mechanism which shifts the sliding shutter of the disk cassette in a predetermined direction to align the through openings to the disk access apertures, the disk access opening cannot be opened when recording and/or reproducing of the information is to be performed on the reversed side of the disk cassette.

Therefore, it is an object of the invention to provide a disk cassette which has a sliding shutter mechanism allowing recording and/or reproducing information on both sides of the disk by means of a single-side supporting disk drive apparatus.

Another object of the invention is to provide a sliding shutter mechanism for a disk cassette which allows a sliding shutter to slide in either direction so that disk access openings on both sides of the disk cassette can be accessed by a single head assembly.

A further object of the invention is to provide a sliding shutter mechanism which can place the sliding shutter at a disk access apertures closing position by a pair of bias springs respectively biasing the shutter toward mutually opposite directions.

These and other objects are accomplished by a disk cassette specified in claims 1 and 4. The disk cassete according to the invention has a cassette casing in which a disk is rotatably disposed. The cassette casing is formed with a disk access aperture. A sliding shutter is slidably mounted on the cassette casing. The shutter has a section opposing the disk access aperture. A pair of first and second through openings are formed on the section opposing the disk access aperture. The shutter is biased by means of a pair of bias spring members in mutually opposite first and second directions. The first and second through openings are so arranged that the first through opening is aligned with the disk access aperture when the shutter is shifted in a first direction against the spring force of the second spring and the second through opening is aligned with the disk access aperture when the shutter is shifted in the second direction against the spring force of the first spring.

Further details of the invention are indicated in the dependent claims.

The first and second springs may comprise torsion coil springs, each having a first leg seated on a peripheral wall of the cassette casing and a second leg engaged with the shutter member. Though the torsion coil spring may be preferred in view of the space available in the cassette casing for receiving the springs, it would be possible to use any type of springs, such as tension coil spring, coil compression spring, torsion bar spring, leaf spring and so forth.

In case the torsion coil springs having first and second legs are used, each second leg may engage in releasable fashion with the shutter means. In the preferred construction, the second leg has a bent end at which releasably engages with the shutter means, and the disk cassette further comprises a means for restricting play-movement of the second leg in a direction perpendicular to the major section of the second leg. The cassette casing may define a clearance in which the bent end of each of the first and second springs moves.

Restricting means are associated with the second leg of the first and second springs for restricting pivotal movement of the bent end in the clearance. The pivotal movement restricting means may preferably comprise a rib integrally formed with the cassette casing and extending into the internal space of the casing. In the alternative, the pivotal movement restricting means may also comprise a recess formed on the inner periphery of the cassette casing, with which the bent end of the second leg engages at the end of stroke thereof.

The present invention will be understood more fully from the detailed description given herebelow and from the accompanying drawings of the preferred embodiment of the invention, which, however, should not be limited to the shown embodiments, but are for explanation and understanding only.

In the drawings:

Fig. 1 is an exploded perspective view of the preferred embodiment of a disk cassette according to the present invention;

Fig. 2 is a perspective view of the preferred embodiment of the disk cassette of Fig. 1, but shown in a form, in which a cassette casing composed of upper and lower halves is assembled and a sliding shutter for opening and closing disk access openings is released from the cassette casing;

Fig. 3 is an enlarged plan view of the major part of the preferred embodiment of the disk cassette with a shutter mechanism according to the invention, in which an upper half of a cassette casing is removed for the sake of disclosure;

Fig. 4 is an enlarged side elevation of the major part of the preferred embodiment of the disk cassette, in which is shown a relationship between a shutter biasing torsion coil spring and the shutter;

Fig. 5 is a section of the major part of the disk cassette taken along line V - V of Fig. 4;

Fig. 6 is an enlarged partial plan view of another embodiment of the disk cassette according to the invention;

Fig. 7 is a perspective illustration showing a manner of securing a torsion spring to be employed in the disk cassette according to Fig. 6;

Fig. 8 is a plan view of the torsion spring as secured in the disk cassette;

Fig. 9 is a partial section of one of an upper and lower shell of a cassette casing of another embodiment of the disk cassette shown in Fig. 6; and

Fig. 10 is a partial section of the other shell of the cassette casing of the disk cassette according to Fig. 6:

Fig. 11 is a partial plan view of a further embodiment of the disk cassette according to the invention and

Fig. 12 is an enlarged partial plan view of the disk cassette shown in Fig. 11, in which the upper shell is removed for the purpose of illustration.

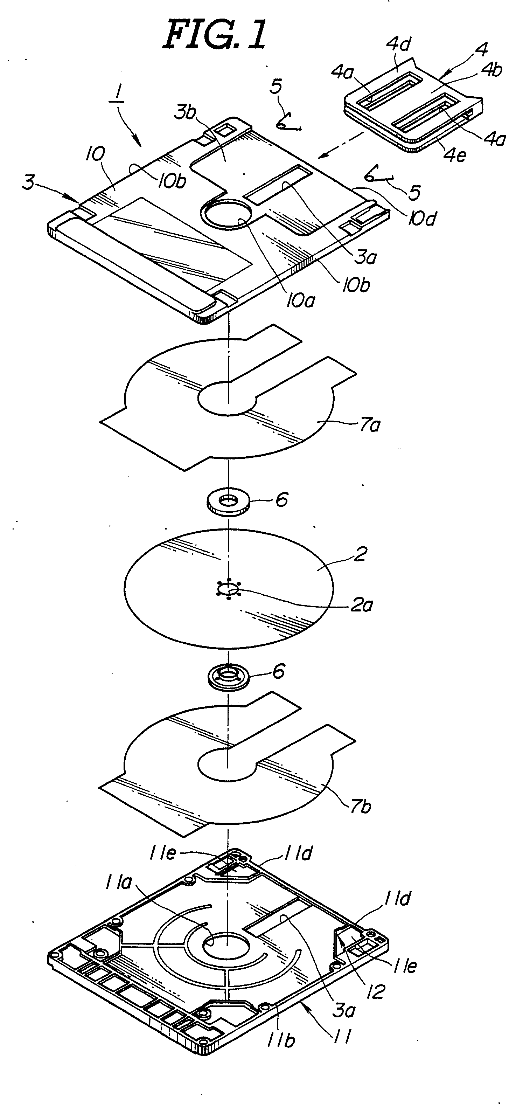

Referring now to the drawings particularly to Figs 1 through 5, the first embodiment of a disk cassette which is generally represented by the reference numeral "1", has a magnetic recording disk 2 and a cassette casing 3. The magnetic disk 2 is formed into a thin flexible disk form of high-polymer compound. A plurality of recording tracks are formed on both sides of the magnetic disk for storing information to be recorded. On the other hand, the cassette casing 3 is made of a synthetic resin, such as hard high-polymer compound, and has a generally thin box shaped configuration defining a disk receptacle space therein. The magnetic disk 2 is rotatably disposed within the disk receptacle space defined in the cassette casing 3.

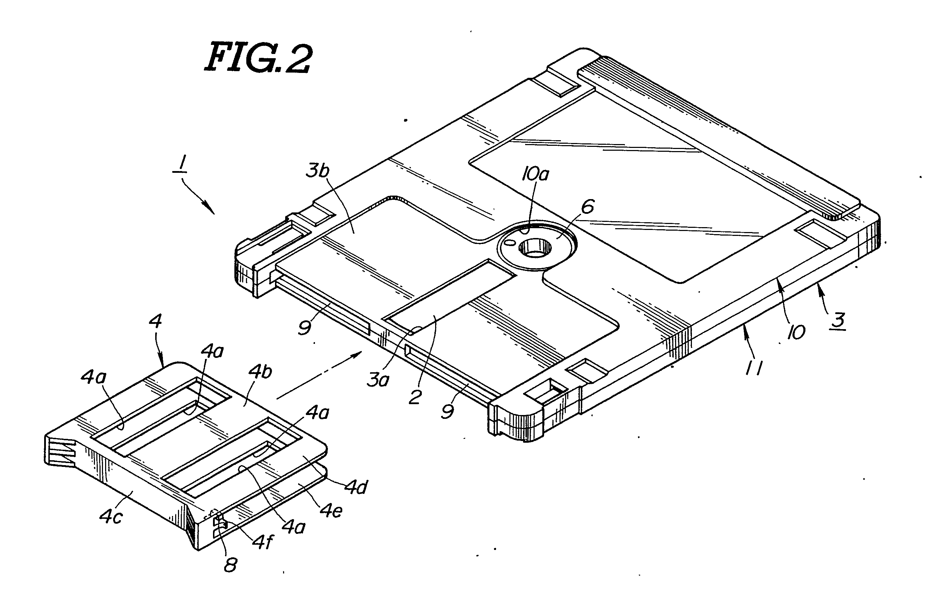

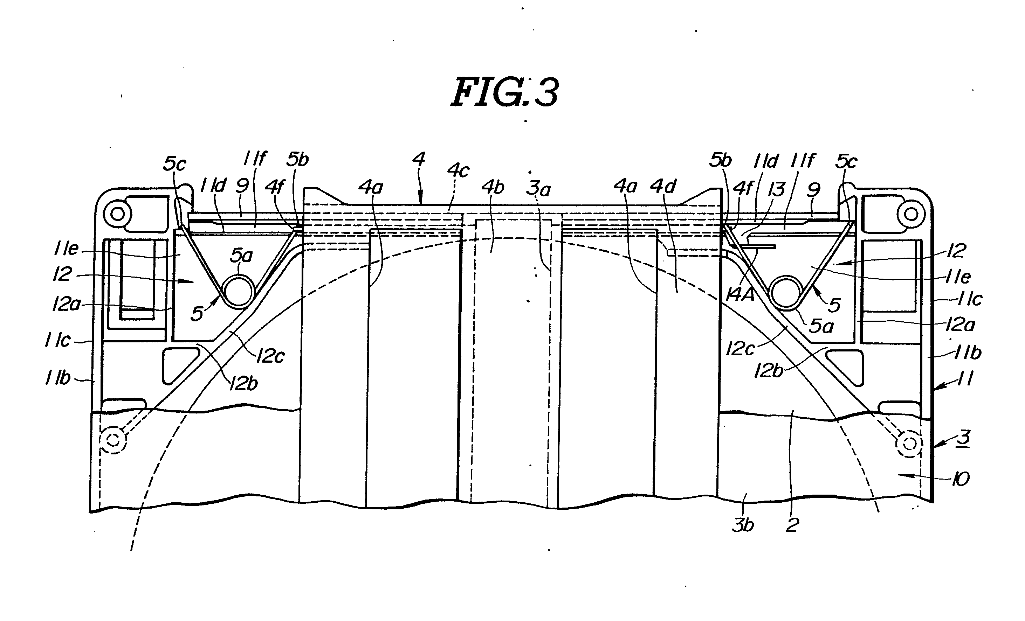

The cassette casing 3 is constituted by an upper half 10 and a lower half 11. Each of the upper and lower halves 10 and 11 have vertically extending walls, i.e. front walls 10d and 11d, side walls 10b and 11b and a rear wall. The front walls 10d and 11d extend along the front edge of the upper and lower halves 10 and 11 and between the both side walls 10b and 11b. As will be clearly seen from Figs 2 and 3, the front walls 10d and 11d are oriented at the positions slightly offset from the front edge of cassette casing 3 rearwardly. The front wall 10d of the upper half has cut-outs extending along the lower edge thereof from both lateral ends thereof and to near the lateral center thereof. On the other hand, the front wall 11d of the lower half 11 is formed with cut-outs extending along the upper edge thereof from the lateral ends to near the lateral center. The lateral length of the cut-outs of the front walls 10d and 11d coincide with each other to define guide grooves 9 for sliding movement of a sliding shutter which will be described later.

The vertical walls of the upper and lower halves mate with each other to form the front wall, side walls and rear wall of the cassette casing when the upper and lower halves 10 and 11 are assembled. The front walls 10d and 11d, the side walls 10b and 11b and rear walls of the upper and lower halves 10 and 11 of the cassette casing 3 are assembled with each other by welding in order form the generally rectangular thin box shaped cassette casing. The upper half 10 has an essentially horizontally extending upper wall section which lies above the magnetic disk and substantially in parallel to the latter. Similarly, the lower half 11 has an essentially horizontally extending lower wall section lying below the magnetic disk in parallel relation thereto. The upper and lower wall sections of the cassette casing 3 are formed with a stepped down section 3b extending to the front end of cassette casing 3. The stepped down section 3b extends longitudinally over about half of the overall longitudinal dimension of the cassette casing 3.

The lateral ends of the stepped down section 3b terminate adjacent to both lateral edges of the cassette casing with maintaining generally high sections at both lateral end sections.

Essentially rectangular through openings 3a are formed at about lateral center of the stepped down sections 3b of the cassette casing 3. These rectangular through opening expose the recording surfaces of the magnetic disk 2 so that a magnetic head or magnetic heads may access the recording tracks of the disk. Therefore, these rectangular through openings 3a of the cassette casing 3 will be referred to as "disk access opening". The disk access openings 3a are formed in substantially vertical alignment with respect to each other and longitudinally extend between a position near the front edge of the cassette casing to a position near the center of the cassette casing. The length of the disk access openings 3a is so determined to be long enough to allow the magnetic head to access all of the recording tracks formed on the magnetic disk 2.

A sliding shutter 4 is slidably mounted on the front end of the cassette casing 3. The sliding shutter 4 is, in practice disposed in the stepped down sections 3b. The lateral width of the shutter 4 is made smaller than the lateral width of the stepped down section 3b, so that the shutter slidingly movable within the stepped down section 3b. The shutter 4 has an upper horizontal section 4d mating with the upper wall section of the cassette casing 3 and a lower horizontal section 4e mating the lower wall section of the cassette casing. The upper and lower horizontal sections 4d and 4e are respectively formed with pairs of rectangular through openings 4a. The rectangular through openings 4a of each pair are located in spaced apart relationship with respect to each other, thus defining therebetween an intermediate section 4b. The rectangular openings 4a are of a size slightly greater than or equal to that of the disk access openings 3a of the cassette casing 3. The shutter 4 is associated with torsion coil springs 5a and 5b. One of the torsion coil spring 5 laterally urges the shutter in one direction and the other torsion coil spring 5 laterally biases the shutter in the other direction opposite to the biasing direction of the first spring.

The shutter 4 is provided with a guide projection 8. The guide projection 8 engages with a guide groove 9 defined at the front end of the cassette casing 3. The projection 8 has a head portion entering into the guide groove 9 so that the shutter 4 may not be stripped off from the cassette casing 3. The guide projection 8 serves for guiding sliding motion of the sliding shutter 4.

As shown in Fig. 1, the magnetic disk 2 is formed with a central through opening 2a. A pair of center core members 6 pass through the center hole 2a. The center core members 6 are respectively formed with a center positioning opening 6a and offset chucking openings 6b so that the magnetic disk 2 can be driven with a turntable of the disk drive apparatus. The center core members 6 engage each other to form a center core disk. The center core members 6 are respectively exposed through center openings 10a and 11a of the upper and lower halves 10 and 11. Liners 7a and 7b are disposed between inner periphery of the cassette casing 3 and the magnetic disk 2. The liners 7a and 7b are of essentially U-shaped configuration having cut-outs 7c and 7d which are located in alignment with disk access openings 3a, respectively. The liners 7a and 7b are designed for protecting the magnetic disk against wear and static electricity and for serving as cleaners for the disk.

As clearly shown in Fig. 3, the torsion coil springs 5 is formed into essentially V-shaped configuration with a coiled intermediate section 5a. The torsion coil springs 5 are respectively received in spring rests 12 defined at the front end of the cassette casing adjacent respective lateral sides. Each of the spring rests 12 is defined by ribs 12a, 12b and 12c. The ribs 12a, 12b and 12c are constituted by upper section integrally formed with the upper half 10 and lower sections integrally formed with the lower half 11. The upper and lower sections mate with each other to form the ribs 12a, 12b and 12c. The ribs 12 extend substantially in parallel to the side walls formed by sections 10b (not shown in Fig. 3) and llb of the upper and lower halves 10 and 11 of the cassette casing 3. The ribs 12b extend transversely from the rear end of the rib 12a and in parallel to the front end walls 10d (not shown in Fig. 3) and 11d of the upper and lower halves 10 and 11. The ribs 12c extend from the end of the associated rib 12b remote from the adjoining section between the ribs 12a and 12b and in oblique to the longitudinal axis of the cassette casing 3.

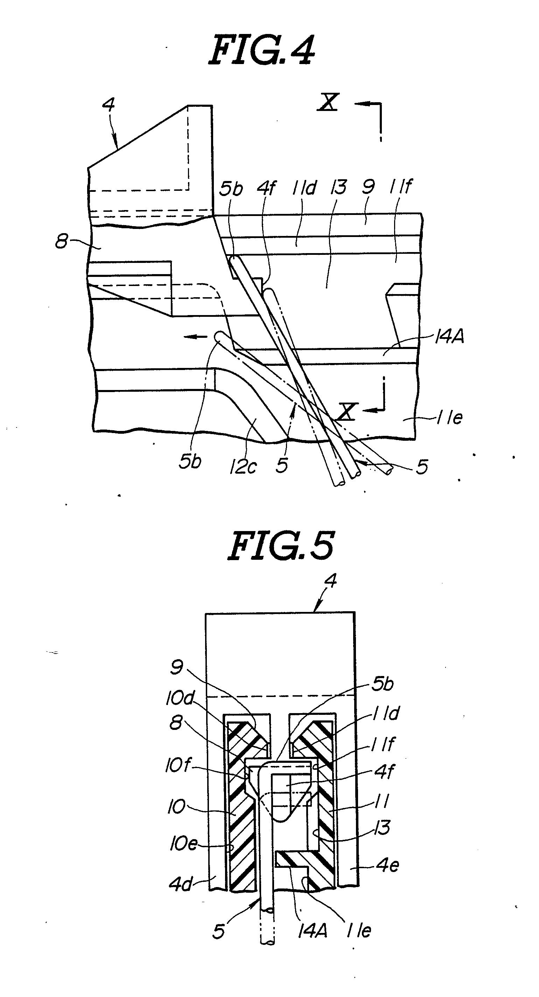

The torsion coil springs 5 have leg sections extending from the coiled intermediate section 5a and mutually angled to each other for configurating the essentially V-shaped form. The lateral inner ends 5b of the torsion coil springs 5 engage with a spring hooking strip 4f laterally extending from the sliding shutter 4. On the other hand, the lateral outer ends 5c of the torsion coil springs 5 resiliently engage with the inner periphery of the spring rest 12. As shown in Fig. 5, the lateral inner ends 5b of the torsion coil springs 5 are perpendicularly bent and are rested in a guide groove defined by grooves 10f and 11f formed in the upper and lower halves 10 and 11 of the cassette casing 3. The guide grooves 10f and 11f extend laterally along the front edge of the cassette casing 3 and are thus adapted to guide thrusting movement of the ends 5b of the torsion coil springs 5 with the shutter 4.

The lower half 11 is formed with cut-outs 13 adjoining the guide grooves 11f on the inner periphery 11e. Ribs 14a extend from the inner periphery 11e of the lower half and project into the cutout 13. The upper edges of the ribs 14a mate with the lateral inner end portion of the torsion coil springs 5 so as to restrict bending of the torsion coil spring during sliding movement of the shutter 4. On the other hand, during the sliding movement of the shutter 4, the cut-outs 13 allow offset of the bent end in longitudinal direction. Therefore, even when the bent end 5b is longitudinally offset rearwardly during sliding motion of the shutter 4, the end will never contact with the inner periphery 11e which otherwise would encroach upon the innner periphery 11e of the lower half 11 to cause sticking of the shutter at the shifted position.

When shock is exerted on the disk cassette due to drop of the cassette, the bent end 5b can be released from engagement with the strip 4f as shown by two-dotted line in Fig. 4. Even in this case, the cut-out 13 and the rib 14a prevent the released end 5b from encroaching upon the inner periphery. In such case, by shutter motion in a direction contracting the torsion coil spring 5, the bent end 5b is depressed in contracting direction by the lateral end of the spring hooking strip 4f to cause upward movement of the coiled intermediate section 5a along the inclined rib 12c. As a result, the bent end 5b is pushed frontwardly to be automatically returned to the position shown by the solid line in Fig. 4.

As is well appreciated herefrom, the shutter 4 is placed at the predetermined neutral position to place the intermediate sections 4b in alignment with the disk access openings 3a, while the disk cassette 1 is not in use. By blocking the disk access openings 3a, entry of the dust into the cassette or putting finger prints on the disk surface can be successfully prevented. On the other hand, the disk cassette 1 can be loaded on the single-side supporting disk drive apparatus for recording and/or reproducing information on the recording tracks on both sides. With the construction set forth above, the per se known construction of the shutter handling mechanism in the disk drive apparatus engages actuation claw to one of the projected portions 4g of the shutter to cause sliding movement of the shutter 4 when the disk cassette 1 is inserted. During this shutter movement, one of the torsion coil springs 5 which is oriented at the side toward which the shutter slides, is contracted to accumulate torsional spring force. This spring force serves as return force to return the shutter to the initial position when the actuation fore is released. By shifting the shutter to one direction, the trailing side through opening 4a is aligned with the disk access openings 3a. Therefore, the magnetic head of the disk drive apparatus can access the disk for recording and/or reproducing on recording tracks formed on the associated side of the disk. When the reverse side is to be used for recording and/or reproducing information, the disk cassette is reversed to be inserted into the disk drive apparatus in upside-down form. At this time, the projecting portion 4g which is oriented opposite to that engaged with the actuation claw in the former case, engages with the actuation claw to be shifted. At this time, similarly to the former case, the torsion coil spring 5 compressed by the shutter movement accumulates the return force. By shifting of the shutter 4, the trailing side through opening 4a is aligned with the disk access opening 3a to allow access of the reverse side of the magnetic disk 2 by the magnetic head of the disk drive apparatus.

As will be appreciated herefrom, since the sliding shutter 4 can be operated to shift in either direction along the front edge of the cassette casing, the shown embodiment of the cassette can be used by single-side supporting disk drive apparatus and can record and/or reproduce information on both sides.

In addition, since torsion coil spring mounting structure set forth above can assure prevention of sticking of the shutter which may be caused by encroaching of the bent end of the spring upon the inner periphery of the cassette casing, steady operation of the shutter can be obtained.

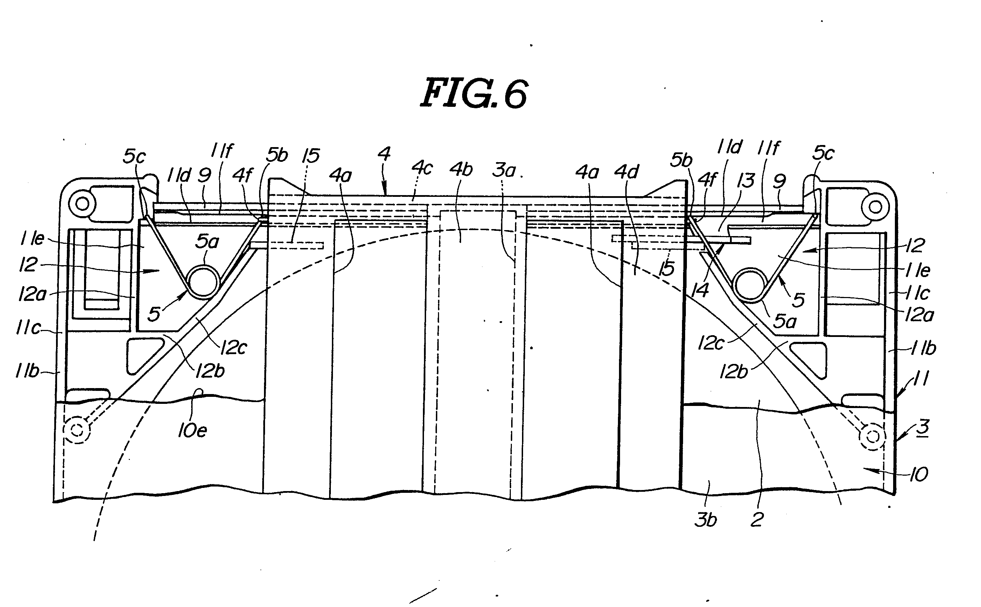

Figs. 6 to 10 show the second embodiment of the disk cassette according to the present invention. In the following discussion of the second embodiment of the invention, the elements constituting the disk cassette and substantially common to the foregoing first embodiment will be represented by the same reference numerals used in the former embodiment.

The shown second embodiment of the disk cassette is featured by ribs 15 which extend adjacent the ribs 14a. The laterally outer end of the ribs opposes the inner-side legs of the torsion coil springs 5 so as to restrict movement of the latter.

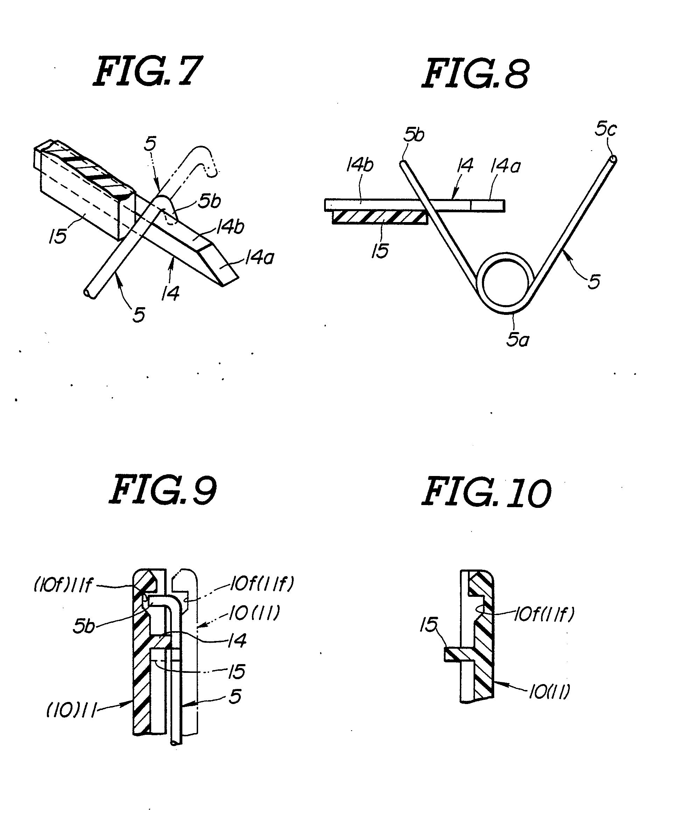

As shown in Figs. 7 and 8, the rib 15 has smaller length than the rib 14a but has larger height than the rib 14a. Namely, the rib 14a extending from the inner periphery of the lower half 11, has an end opposing the inner periphery of the upper half 10 so that the inner-side leg of the torsion coil spring 5 can pass the clearance. On the other hand, as shown in Fig. 9, the rib 15 vertically extends across the internal space of the cassette casing for completely blocking movement of the inner-side leg of the torsion spring. In the preferred embodiment, the rib 15 is so oriented as to place the laterally outer edge opposing the inner-side leg of the torsion coil spring 5 at a position, where the bent end 5b of the inner-side leg cannot be moved rearwardly to an extent that it is shifted to a position rearwardly of rear edge of the spring hooking strip. By restricting movement of the bent end 5b of the torsion coil spring, automatic resumption of engagement between the spring hooking strip 4f and the bent end 5b of the torsion coil spring can be assured.

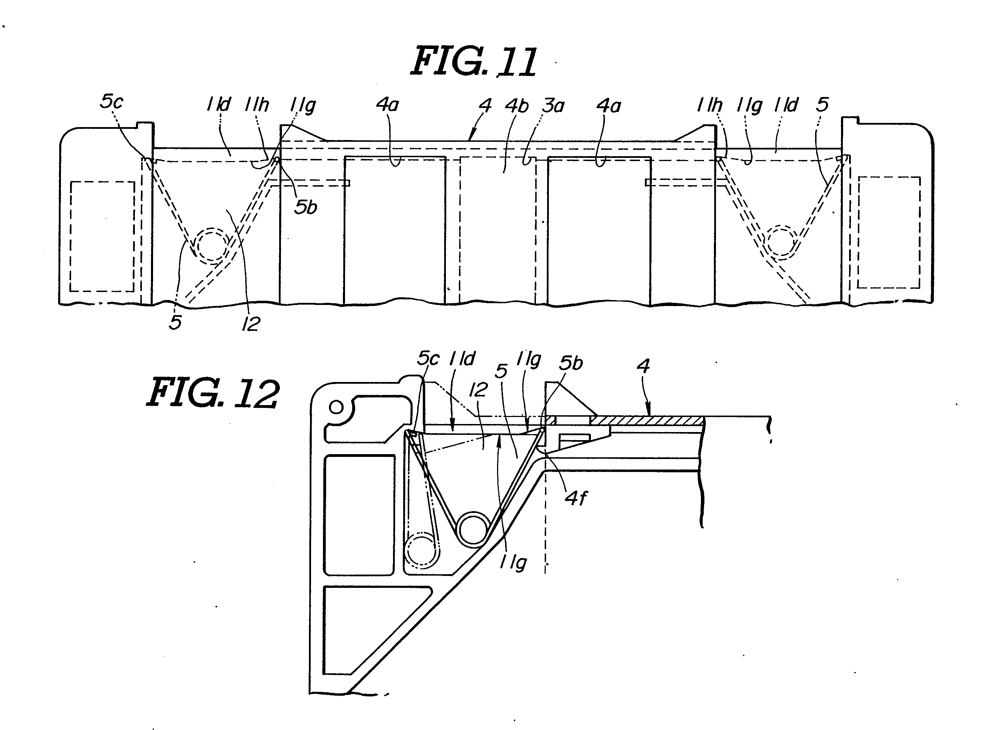

Fig. 11 and 12 show the third embodiment of the disk cassette according to the invention. Similarly to the foregoing second embodiment, this embodiment also features to restrict the stroke of the inner-side leg of the torsion coil spring. In this embodiment, the front wall 11d of the lower half 11 is formed with recesses 11h on the inner periphery 11g. The recesses 11h receive the bent ends 5b of the torsion coil springs 5 when the sliding shutter 4 is shifted. The recesses 11h have inner end edges restricting inward movement of the inner-side legs of the torsion coil springs 5.

The recesses 11h thus restrict the most inwardly shifted position of the bent ends 5b of the torsion coil springs 5. This assumes that the shifting shutter 4 is placed at the neutral position, accurately.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

## Claims

1. A disk cassette (1) comprising:

a recording medium disk (2);
a cassette casing (3) rotatably housing said disk and defining a center opening (10a,11a) through which said disk is chucked by a rotary driving means, and a disk access opening (3a) across which information is transferred between said disk and an information transfer means; and
a shutter means (4) slidably mounted on said cassette casing for openably closing said disk access opening, said shutter means having a first section (4a) through which said information transfer means accesses said disk for transferring information when said shutter is placed at a first shifted position, and a second section (4b) blocking access of said information transfer means to said disk;

**characterized** in that

said shutter means (4) has a third section (4a) through which said information transfer means accesses said disk for transferring information when said shutter is in a second shifted position; and

spring means (5) are provided for normally biasing said shutter to a neutral position in which access to said disk is blocked by said second section (4b) of the shutter means.

2. A disk cassette as claimed in claim 1, wherein said first and third sections (4a,4a) of said shutter means (4) are arranged at symmetric positions with respect to the center axis of said second section (4b).

3. A disk cassette as claimed in claim 1 or 2, wherein said second section (4b) of said shutter means (4) is in an alignment with said disk access opening (3) when said shutter means is in the neutral position , and wherein said shutter means (4) is movable in a first direction to be positioned in said first shifted position in which said first section (4a) is in alignment with said disk access opening (3), and in a second direction opposite to said first direction to be positioned in said second shifted position in which said third section (4a) is placed in alignment with said disk access opening.

4. A disk cassette (1) comprising:

a recording medium disk (2);

a cassette casing (3) rotatably housing said disk and defining a center opening (10a,11a) through which said disk is chucked by a rotary driving means, and a disk access opening (3a) across which information is transferred between said disk and an information transfer means; and

a shutter means (4) slidably mounted on said cassette casing (3) for openably closing said disk access opening (3a),

**characterized** in that

said shutter means (4) is mounted on one edge (10d,11d) of said cassette casing and is normally placed at a neutral position where it opposes said disk access opening for blocking access of said information transfer means to said disk (2) and is movable along the associated edge (10d,11d) of the cassette casing in mutually opposite first and second directions across said neutral position;

spring means (5) including first and second springs (5) cooperative with each other are provided for normally biasing said shutter to said neutral position; and

limiting means (15;11h) are associated with said first and second springs for limiting biasing force of the latter so that the spring forces of said first and second springs are balanced when said shutter means is palced at said neutral position.

5. A disk cassette as claimed in any of the claims 1 to 3, wherein said spring means include first and second springs (5) cooperative with each other, and wherein limiting means (15;11h) are associated with said first and second springs (5) for limiting biasing force of the latter so that the spring forces of said first and second springs are balanced when said shutter means is placed at said neutral position.

6. A disk cassette as claimed in any of the claims 1 to 3, wherein said spring means include first and second springs (5) cooperative with each other, and wherein limiting means (15;11h) are associated with said first and second springs (5) for limiting stroke of said first and second springs so that the spring forces of said first and second springs are balanced when said shutter means (4) is placed at said neutral position when said disk cassette is not in use.

7. A disk cassette as claimed in any of the claims 1 to 6, wherein said spring means comprise first and second springs (5) provided at both sides of said shutter means (4) for holding said shutter means in an equilibrium position corresponding to said neutral position.

8. A disk cassette as claimed in claim 7, wherein said first and second springs comprise torsion coil springs (5), each having a first leg seated on a peripheral wall (11d) of said cassette casing (3) and a second leg engaged with said shutter member (4).

9. A disk cassette as claimed in claim 8, wherein said second leg engages with said shutter means (4) in releasable fashion.

10. A disk cassette as claimed in claim 9, wherein said second leg has a bent end (5b) at which said second leg releasably engages with said shutter means (4), said disk cassette further comprising means (15) for restricting play-movement of said second leg in a direction perpendicular to the major section of said second leg.

11. A disk cassette as claimed in claim 10, wherein said cassette casing (3) defines a clearance (13) in which said bent end (5b) of each of said first and second springs (5) moves.

12. A disk cassette as claimed in claim 11, which further comprises restricting means (14a) associated with said second leg of said first and second springs (5) for restricting pivotal movement of said bent end in said clearance (13).

13. A disk cassette as claimed in claim 12, wherein said pivotal movement restricting means comprises a rib (14a, 15) integrally formed with said cassette casing (3) and extending into the internal space of said casing.

14. A disk cassette as claimed in claim 12, wherein said pivotal movement restricting means comprises a recess (11h) formed on the inner periphery (11g) of said casing, with which said bent end of said second leg engages at the end of stroke thereof.

# FIG.1

# FIG.2

*1*

*3b*

*10a*

*6*

*3*

*10*

*11*

*9*

*3a*

*2*

*9*

*4*

*4a*

*4a*

*4b*

*4a*

*4d*

*4e*

*4c*

*4a*

*4f*

*8*

0 266 781

# FIG. 3

0 266 781

## FIG.4

## FIG.5

# FIG.6

0 266 781

# FIG.7

# FIG.8

# FIG.9

# FIG.10

# FIG.11

# FIG.12

0 266 781

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP - A1 - 0 142 411 (HITACHI MAXELL LTD.)<br><br>* Fig. 1,5; page 8, line 15 - page 9, line 7 *<br><br>-- | 1-12 | G 11 B 23/03<br>G 11 B 23/033 |
| A | EP - A2 - 0 133 734 (SYQUEST TECHNOLOGY)<br><br>* Fig. 1,2,3 *<br><br>---- | 1 | |

**TECHNICAL FIELDS SEARCHED (Int. Cl.4)**

G 11 B 5/00

G 11 B 17/00

G 11 B 23/00

G 11 B 25/00

The present search report has been drawn up for all claims

| Place of search | Date of completion of the search | Examiner |
|---|---|---|
| VIENNA | 29-01-1988 | BERGER |